# EUROPEAN PATENT SPECIFICATION

(11) **EP 4 077 523 B1**
(45) Date of publication and mention of the grant of the patent: **09.04.2025**
(21) Application number: 20829900.8
(22) Date of filing: 16.12.2020
(51) Int. Cl.: C08K 9/04, C08L 67/02, C08K 3/34, B65D 65/46, C08J 3/20

(54) **BIODEGRADABLE AND COMPOSTABLE COMPOSITION**
BIOLOGISCH ABBAUBARE UND KOMPOSTIERBARE ZUSAMMENSETZUNG
COMPOSITION BIODÉGRADABLE ET COMPOSTABLE

(30) Priority: 20.12.2019 EP 19218674
(43) Date of publication of application: 26.10.2022
(73) Proprietor: Gaia Holding AB, 253 68 Helsingborg (SE)
(72) Inventor: ROSÉN, Åke, 254 54 HELSINGBORG (SE)
(74) Representative: AWA Sweden AB
(86) International application number: PCT/EP2020/086497
(87) International publication number: WO 2021/122798

(56) References cited:
- EP-A1- 3 260 495
- WO-A1-2013/169174

## Description

### Technical field of the invention

The present invention relates to a biodegradable and compostable composition having a unique composition of different components providing a composition that it is fully biodegradable and fully compostable after decomposition. The present invention further relates to a method for preparing said biodegradable and compostable composition.

### Technical Background

The use of fossil based plastic materials has during late time been more and more questioned, especially when used in disposable articles and hygiene products. The conventional raw material for the commonly used plastic polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demands large amount of water.

Moreover, to be able to recycle PE from one article to produce a new one, it has to go through a process of autoclaving to remove bacteria. This process is more expensive than producing new PE, leading to a lower degree of recycling.

Further, recycled plastic or rubber has in some cases shown to compose substances toxic to human or nature, making them not suitable for use at places where they are exposed to humans.

Even further, use of plastics in many products has led to the release of small plastic components, called micro plastics, into the ground and water. Micro plastics have been found all over the globe and it is today not known what environmental effects the large distribution can have.

From both governments and public there is a large demand for better material to use in disposable products. The material used must be made to a large extent of renewable sources, be biodegradable and compostable. One such material commonly used is polylactic acid (PLA) produced from starch. The monomer is typically made from fermented plant starch such as from cassava, sugancane or sugar beet pulp. However, this material comes with some drawbacks some of them being that the temperature for decomposition is 70 ºC, but the softening temperature is 50 ºC. This gives drawbacks during decomposition, since a high temperature is needed to initiate the process, while at the same time the products softens at 50 ºC which restrains the product from being used in environments with temperatures above 50 ºC.

WO 2013/169174 A1 discloses biodegradable compositions comprising an aliphatic polyester, dolomite and/or calcium oxide, starch, and a binding agent.

EP 3 260 495 discloses a biodegradable polyester composition comprising 60-100 parts of biodegradable aliphatic-aromatic polyester. The composition further comprises polylactic acid (PLA), organic and/or inorganic filler as well as copolymer which contains epoxy groups and is based on styrene, acrylate and/or methacrylate.

Thus, there is a need for developing new materials for substituting plastics in many different areas, such as disposable products and hygiene products.

### Summary of the invention

One object of the present invention is to provide a composition suitable for replacing plastics, which composition is made from renewable resources, which is biodegradable, compostable, and which does not leave micro plastics.

Further objective of the present invention is to provide a method for preparing said composition.

Yet another object of the present invention is to provide granules from said composition. The granule being possible to further process using standard machines and processes, such as blow molding, injection molding, thermo folding, or extrusion.

The present invention concerns a composition suitable for replacing plastics, which composition is biodegradable, compostable, and which does not leave micro plastics. According to the invention, the composition comprises: (i) 15-70 % by weight of at least one biodegradable and/or decayable aromatic polyester; (ii) 10-40 % by weight of dolomite and/or calcium carbonate particles having a polished surface; (iii) 0-30 % by weight of starch of vegetable origin; (iv)1-5 % by weight of at least one oil of vegetable origin and/or at least one polyol; (v) 5-30 % by weight of an additive chosen from hydrated magnesium silicate such as talcum powder; and (vi) 0-50 % by weight of at least one aliphatic polyester.

The present invention also concerns use of a composition as described above or a composition prepared according to the method as described herein as a formable material for replacing fossil-based plastics.

The present invention also concerns a granule comprising the composition as described herein or prepared according to the method as described herein.

Hereby an improved composition suitable for replacing plastic is provided, which is feasible for use in several disposable products or as hygiene products, without leaving microplastics, and which is biodegradable and compostable.

In one embodiment of the present invention, the dolomite and/or calcium carbonate particles may be replaced with marble, or limestone particles and/or a mixture thereof. Calcium carbonate, dolomite, marble and limestone are constantly renewed in the ground. During decaying, it will again return to the soil and act as a soil improvement agent. The calcium carbonate, dolomite, marble and/or limestone particles as used according to the present invention have preferably a polished surface, such that substantially no sharp edges remain on the surface of the particles. Removing substantially all the sharp edges of the particles will decrease the risk of tears of a film produced from the composition or from the granules made from the composition according to the present invention.

Further, the mix of dolomite and/or calcium carbonate having a polished surface, with at least one oil of vegetable origin will convert the dolomite and/or calcium carbonate to a lubricant. The lubricant function is further improved by an additive chosen from hydrated magnesium silicate such as talcum powder, leading to decrease of the tear of the machines used. Even further, the use of starch of vegetable origin will make the composition non-elastic and give the product a characteristic color which has a "wood-like" appearance. The "wood-like" appearance is beneficial and appealable to certain consumers since the wood-like appearance is perceived differently from a common plastic appearance which may be connected with a negative environmental effect to certain consumers/buyers. Further, the use of at least one oil of vegetable origin will act as a coupling agent in the composition leading to a low permeability compared to plastics.

In one embodiment said composition comprises (i) 40 % by weight of at least one biodegradable and/or decayable aromatic polyester; (ii) 25 % by weight of dolomite and/or calcium carbonate particles having a polished surface; (iii) 0 % by weight of starch of vegetable origin; (iv) 5 % by weight of at least one oil of vegetable origin; (v) 10 % by weight of an additive chosen from hydrated magnesium silicate such as talcum powder; (vi) 20 % by weight of at least one aliphatic polyester, wherein said dolomite and/or calcium carbonate has been pre-treated with at least one oil of vegetable origin. The composition being prepared as granules, suitable for further machine processing by blow molding into a film.

In another embodiment said composition comprises (i) 27 % by weight of at least one biodegradable and/or decayable aromatic polyester; (ii) 10 % by weight of dolomite and/or calcium carbonate particles having a polished surface; (iii) 15 % by weight of starch of vegetable origin; (iv) 3 % by weight of at least one oil of vegetable origin; (v) 5 % by weight of an additive chosen from hydrated magnesium silicate such as talcum powder; (vi) 40 % by weight of at least one aliphatic polyester, wherein said dolomite and/or calcium carbonate has been pre-treated with at least one oil of vegetable origin. The composition being prepared as granules, suitable for further machine processing by thermo folding into a compostable trough.

In another embodiment said composition comprises (i) 30 % by weight of at least one biodegradable and/or decayable aromatic polyester; (ii) 10 % by weight of dolomite and/or calcium carbonate particles having a polished surface; (iii) 0 % by weight of starch of vegetable origin; (iv) 3 % by weight of at least one oil of vegetable origin; (v) 10 % by weight of an additive chosen from hydrated magnesium silicate such as talcum powder; (vi) 47 % by weight of at least one aliphatic polyester, wherein said dolomite and/or calcium carbonate has been pre-treated with at least one oil of vegetable origin. The composition being prepared as granules, suitable for further machine processing by extrusion into straws.

In another embodiment said composition comprises (i) 30 % by weight of at least one biodegradable and/or decayable aromatic polyester; (ii) 10 % by weight of dolomite and/or calcium carbonate particles having a polished surface; (iii) 10 % by weight of starch of vegetable origin; (iv) 3 % by weight of at least one oil of vegetable origin; (v) 10 % by weight of an additive chosen from hydrated magnesium silicate such as talcum powder; (vi) 37 % by weight of at least one aliphatic polyester, wherein said dolomite and/or calcium carbonate has been pre-treated with at least one oil of vegetable origin. The composition being prepared as granules, suitable for further machine processing by injection molding into cutlery.

In another embodiment said composition comprises (i) 68 % by weight of at least one biodegradable and/or decayable aromatic polyester; (ii) 15 % by weight of dolomite and/or calcium carbonate particles having a polished surface; (iii) 0 % by weight of starch of vegetable origin; (iv) 2 % by weight of at least one oil of vegetable origin; (v) 5 % by weight of an additive chosen from hydrated magnesium silicate such as talcum powder; (vi) 10 % by weight of at least one aliphatic polyester, wherein said dolomite and/or calcium carbonate has been pre-treated with at least one oil of vegetable origin. The composition being prepared as granules, suitable for further machine processing by blow molding into a film further processed to a bag.

In another embodiment said composition comprises (i) 15 % by weight of at least one biodegradable and/or decayable aromatic polyester; (ii) 20 % by weight of dolomite and/or calcium carbonate particles having a polished surface; (iii) 0 % by weight of starch of vegetable origin; (iv) 2 % by weight of at least one oil of vegetable origin; (v) 15 % by weight of an additive chosen from hydrated magnesium silicate such as talcum powder; (vi) 48 % by weight of at least one aliphatic polyester, wherein said dolomite and/or calcium carbonate has been pre-treated with at least one oil of vegetable origin. The composition being prepared as granules, suitable for further machine processing by blow molding into a film suitable for use as a bag, or for further machine processing by thermo folding into a compostable trough.

In one embodiment of the present invention the dolomite and/or calcium carbonate particles may have a particle size of about 2-4 µm.

The dolomite and/or calcium carbonate particles according to the present invention has a polished surface, such that substantially no sharp edges remain on the surface of the particles. Removing substantially all the sharp edges of the particles will increase tear strength. Pre-treating the particles to saturation with at least one oil of vegetable origin will convert the dolomite and/or calcium carbonate particles into a lubricant which will limit the apparatus wear during processing thereof.

In one embodiment of the present invention the starch of vegetable origin may have a particle size of 4-50 µm, such as 4-15 µm or such as 10-40 µm, for example 20-30 µm. The use of starch will give the composition characteristics such that further processing of the granules made thereof will provide a materiel being non-elastic making the material suitable to use for bags carrying heavy loads without tearing of the fingers. Further, the use of starch will give a characteristic color making it possible to distinguishing products made from the invention from other similar products.

In one embodiment of the present invention the starch of vegetable origin may be pre-treated with at least one oil of vegetable origin. Using said pre-treatment will saturate the capillaries of the starch, ensuring that the starch is free from water and thereby increase the strength of the composition.

The present invention further concerns a method for preparing a biodegradable and compostable composition, such as granules, according to claim 1. According to the invention the method comprises: (a) polishing particles of dolomite and/or calcium carbonate to remove sharp edges on the surface; (b) mixing said polished particles, with at least one oil of vegetable origin to provide a non-sticky mixture; (c) heat mixing a composition comprising (i) at least one biodegradable and/or decayable aromatic polyester; (ii) optionally starch of vegetable origin; (iii) an additive chosen from hydrated magnesium silicate such as talcum powder; and (iv) optionally at least one aliphatic polyester; thereafter, during continued mixing, (d) adding said non-sticky mixture of step (b) to said heat mixed base composition; and (e) extruding the mixture of step (d) into granules of said composition.

The present invention also concerns a granule comprising the composition as described herein or prepared according to the method as described herein.

In one embodiment of the method according to the present invention, the mixing in step (d) and extrusion in step (e) may be performed under controlled pressure and heating. The pressure may be below 300 bar and the temperature may be between 150 and 200 ºC.

Said granules produced by the composition can be further processed using standard machines for processing such as blow molding, thermo forming, extrusion, and injection molding into several different shapes. The processed granules may further be used as hygiene products, disposable product, or as coating in cardboard boxes. In one such process, a disposable film may be produced. The disposable film after production may be stretched to provide micro cracks within the film, making it breathable. Said micro cracks after stretching are a result of the characteristics of the composition, which is inherently transferred to the product processed from the granules made form the present invention.

Further for a product, such as a film or disposable, prepared from the granules of the composition according to the present invention, the decomposition of said product may be initiated at 30-35 ºC if it is present under compostable conditions with bacteria present. The decomposition may be completed within two months when nothing more than earth remains. As compared to PLA where the decomposition requires 70 ºC to be initiated, which makes higher demand on the facilities handling the decomposition. Easy handling of decomposition is advantageous since it is preferred in a green circular economy. The circular economy is based on the ability to decompose and re-use material, reducing the need for exploiting new raw materials. Even further, when a product prepared from the granules of the composition according to the present invention is used as a film to cover food, the qualities of the food is increased due to a 5 times lower permeability than PE and a 40 times lower permeability than cardboard. Further, when a product prepared from the granules of the composition according to the present invention is used in applications reaching the ground or water, the product does not release micro plastics into the environment and it does not compose of substances toxic to humans and the nature. By the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

The invention also concerns use of a composition comprising the components as described herein or a composition prepared according to the method as described herein as a formable material for replacing fossil-based plastics.

### Definitions

The term "dolomite" means the mineral CaMg(CO₃)₂ or a commercially available product which is won from a natural occurring dolomite deposit or which is sold as "dolomite".

Talc is a clay mineral composed of hydrated magnesium silicate with the chemical formula Mg₃Si₄O₁₀(OH)₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a composition suitable for replacing plastics which is biodegradable, compostable, and which does not leave micro plastics in the ground or water during or after use. The composition according to the invention decomposes at lower temperatures than that required when poly lactic acid (PLA) is present as a component of the composition. PLA requires temperatures of about 70°C in order to decompose and required a higher energy input.

The biodegradable and compostable composition suitable for replacing plastic according to the present invention thus comprises
(i) 15-70 % by weight of at least one biodegradable and/or decayable aromatic polyester;
(ii) 10-40 % by weight of dolomite and/or calcium carbonate particles having a polished surface;
(iii) 0-30 % by weight of starch of vegetable origin;
(iv) 1-5 % by weight of at least one oil of vegetable origin;
(v) 5-30 % by weight of an additive chosen from hydrated magnesium silicate such as talcum powder;
(vi) 0-50 by weight of at least one aliphatic polyester.

In an embodiment, said dolomite and/or calcium carbonate has been pre-treated with at least one oil of vegetable origin.

In one embodiment said composition comprises 40 % by weight of at least one biodegradable and/or decayable aromatic polyester 25 % by weight of dolomite and/or calcium carbonate particles having a polished surface, 0 % by weight of starch of vegetable origin chosen from at least one of wheat, oat, rye and barley, 5 % by weight of at least one oil of vegetable origin, 10 % by weight of an additive chosen from hydrated magnesium silicate such as talcum powder; and 20 % at least one aliphatic polyester, wherein said dolomite and/or calcium carbonate has been pre-treated with at least one oil of vegetable origin. The composition being prepared as granules, suitable for further machine processing by blow molding into a film.

In another embodiment said composition comprises 27 % by weight of at least one biodegradable and/or decayable aromatic polyester, 10 % by weight of dolomite and/or calcium carbonate particles having a polished surface, 15 % by weight of starch of vegetable origin chosen from at least one of wheat, oat, rye and barley, 3 % by weight of at least one oil of vegetable origin, 5 % by weight of an additive chosen from hydrated magnesium silicate such as talcum powder, and 40 % by weight of at least one aliphatic polyester, wherein said dolomite and/or calcium carbonate has been pre-treated with at least one oil of vegetable origin. The composition being prepared as granules, suitable for further machine processing by thermo folding into a compostable trough.

In another embodiment said composition comprises 30 % by weight of at least one biodegradable and/or decayable aromatic polyester, 10 % by weight of dolomite and/or calcium carbonate particles having a polished surface, 0 % by weight of starch of vegetable origin chosen from at least one of wheat, oat, rye and barley, 3 % by weight of at least one oil of vegetable origin, 10 % by weight of an additive chosen from hydrated magnesium silicate such as talcum powder, and 47 % by weight of at least one aliphatic polyester, wherein said dolomite and/or calcium carbonate has been pre-treated with at least one oil of vegetable origin. The composition being prepared as granules, suitable for further machine processing by extrusion to straws.

In yet another embodiment, said composition comprises 30 % by weight of at least one biodegradable and/or decayable aromatic polyester, 10 % by weight of dolomite and/or calcium carbonate particles having a polished surface, 10 % by weight of starch of vegetable origin chosen from at least one of wheat, oat, rye, and barley, 3 % by weight of at least one oil of vegetable origin, 10 % by weight of an additive chosen from hydrated magnesium silicate such as talcum powder, and 37 % by weight of at least one aliphatic polyester, wherein said dolomite and/or calcium carbonate had been pre-treated with at least one oil of vegetable origin. The composition being prepared as granules, suitable for further machine processing by injection molding into cutlery.

In another embodiment said composition comprises (i) 68 % by weight of at least one biodegradable and/or decayable aromatic polyester; (ii) 15 % by weight of dolomite and/or calcium carbonate particles having a polished surface; (iii) 0 % by weight of starch of vegetable origin chosen from at least one of wheat, oat, rye and barley; (iv) 2 % by weight of at least one oil of vegetable origin; (v) 5 % by weight of an additive chosen from hydrated magnesium silicate such as talcum powder; (vi) 10 % by weight of at least one aliphatic polyester, wherein said dolomite and/or calcium carbonate has been pre-treated with at least one oil of vegetable origin. The composition being prepared as granules, suitable for further machine processing by blow molding into a film further processed to a bag.

In another embodiment said composition comprises (i) 15 % by weight of at least one biodegradable and/or decayable aromatic polyester; (ii) 20 % by weight of dolomite and/or calcium carbonate particles having a polished surface; (iii) 0 % by weight of starch of vegetable origin chosen from at least one of wheat, oat, rye and barley; (iv) 2 % by weight of at least one oil of vegetable origin; (v) 15 % by weight of an additive chosen from hydrated magnesium silicate such as talcum powder; (vi) 48 % by weight of at least one aliphatic polyester, wherein said dolomite and/or calcium carbonate has been pre-treated with at least one oil of vegetable origin. The composition being prepared as granules, suitable for further machine processing by blow molding into a film suitable for use as a bag, or for further machine processing by thermo folding into a compostable trough.

In one embodiment of the present invention the biodegradable and/or decayable aromatic polyester, may be a polybutylene adipate terephthalate (PBAT), a random copolymer produced from adipic acid, 1,4-butanediol, and terephthalic acid. Any other aromatic polyester with similar properties as PBAT may be used. The at least one biodegradable and/or decayable aromatic polyester is present in an amount of 15-70 % by weight. For instance, 15-25, 25-35, 35-45, 45-55, 55-70 % by weight. For example, the at least one biodegradable and/or decayable aromatic polyester is present in an amount of 15, 27, 30, 40 or 68 % by weight as is disclosed in the experimental part.

In one embodiment of the present invention the composition may include dolomite and/or calcium carbonate particles. An alternative to calcium carbonate particles may be limestone particles or marble particles. Dolomite and/or calcium carbonate are materials acquired from the soil, where it originates from minerals. Said particles may have a polished surface, and by polishing the surface thereof the particles do not give rise to tear initiation in a film prepared from the composition. Thus, all edges that may give rise to a tear initiation in e.g. a film has been removed on the particles, and a level surface is produced which is smooth without any sharp corners. The particles constitute 10-40 % by weight. For example, 10-20 %, 20-30 %, 30-40 % by weight of the composition. In one embodiment the particles constitute 25 % by weight of the composition, in another composition the particles constitute 35 % by weight of the composition, in another embodiment the particles constitute 15 % by weight of the composition and in yet other embodiments it constitutes 10 % by weight of the composition.

Further, according to one embodiment of the present invention, said particles may have a size of about 2-4 µm.

Said particles are pre-treated with at least one oil of vegetable origin as to reach saturation. The mix of the particles and the oil converts the particles to a lubricant, which decreases the tear of the machines used.

In one embodiment, the composition according to the invention may include at least one oil and/or at least one polyol of vegetable origin or a combination thereof. The oil may be rape seed oil or glycerol. The at least one oil of vegetable origin constitute 1-5 % by weight of the composition. For example, 3-5 % by weight. The at least one oil of vegetable origin may for example constitute 2, 3, 4 or 5 % by weight of the composition.

In one embodiment, the composition according to the invention may include an additive chosen from hydrated magnesium silicate. Where talcum powder being the preferred choice. The use of hydrated magnesium silicate further increases said lubricant effect, decreasing the tear of machines even further. The hydrated magnesium silicate, such as talcum constitute 5-30 % by weight of the composition. For example, 5-10%, 10-15 %, 15-20%, 20-25% or 25-30 % by weight. In one embodiment the hydrated magnesium silicate constitutes 15 % by weight of the composition, in another composition the hydrated magnesium silicate constitutes 10 % by weight of the composition. In yet another embodiment it constitutes 5 % by weight of the total weight of the composition.

The composition may in one embodiment according to the invention include starch of a vegetable origin, where said starch having a size of 4-50 µm, for instance around 4, 10, 20, 30, 40 or 50 µm. The starch of vegetable origin constitutes 0-30 % by weight of the composition. For example, 0-5 %, 5-10%, 10-15%, 15-20%, 20-25% or 25-30 % by weight. The composition constitutes for example of 0, 5, 10 or 15 % by weight of starch. In one embodiment the starch of vegetable origin is chosen from at least one of wheat, oat, rye and barley or a combination thereof. The starch source may be present in the form of a bran, or a flour and be obtained from any starch source such as wheat, oat, rye and barley or any other available starch sources. The starch may be present as such or in the form it is present naturally, for instance in any part of the cereal grain such as bran, germ, endosperm or a combination. The use of starch from e.g. a rye bran gives the composition a characteristic "wood-like" color. This "wood-like" color is beneficial for the end product since its appearance will differ from other products of the same category made from e.g. polyethylene (PE) products. The addition of starch gives the composition characteristics such that further processing of the granules made thereof will provide a material being non-elastic making said material suitable to use for bags carrying heavy loads without tearing of the fingers. In one further embodiment according to the invention, the starch being pre-treated with at least one oil of vegetable origin erasing water from the starch, increasing the firmness of the composition.

In one embodiment, the aliphatic polyester, is an acid modified with alcohol. In another embodiment, the aliphatic polyester consists of polymerized units, where the repeating units consist of up to 15 carbon atoms such as up to 10 carbon atoms. In yet another embodiment the aliphatic polyester is a biodegradable polyester, such as polybutylene succinate (PBS). Polybutylene succinate being a fossil-free renewable polyester synthesized from 1,4-butane diol and succinic acid. PBS consists of polymerized units of butylene succinate, with repeating C₈H₁₂O₄ units. In another embodiment, the aliphatic polyester, may be polybutyl acrylate. Polybutyl acrylate (PBA) being synthesized e.g. from acetylene, 1-butyl alcohol, carbon monoxide, nickel carbonyl, and hydrochloric acid. PBA consists of polymerized units of butyl acrylate, with repeating (C₇H₁₂O₂) units. In yet another embodiment, the aliphatic polyester, may be polyhydroxy butyrate (PHB). In one embodiment, the PHB may be poly-3-hydroxybutyrate (P3HB). In yet another embodiment the PHB may be poly-4-hydroxybutyrate (P4HB). Polyhydroxy butyrate is a polyhydroxyalkanoate (PHA), a polymer belonging to the polyesters class that are of interest as bio-derived and biodegradable. Polyhydroxyalkanoates or PHAs are polyesters produced in nature by numerous microorganisms. When produced by bacteria they serve as both a source of energy and as a carbon store. More than 150 different monomers can be combined within this family to give materials with extremely different properties. These materials are biodegradable and are used in the production of bioplastics. PHB is a compostable and biodegradable polyester and derived from renewable sources as it is produced by microorganisms as a response to physiological stress. Using polyhydroxyl butyrate allows for degradation of the end product in water. Any other aliphatic polyester having similar properties as polybutylene succinate, polybutyl acrylate or polyhydroxy butyrate may be used. The at least one aliphatic polyester may constitute 0-50 % by weight of the composition. For example, 0-10 %, 10-20 %, 20-30 %, 30-40 %, 40-50% by weight of the composition. The composition constitutes for example 48, 47, 40, 37, 20 or 10 % by weight of at least one aliphatic polyester as is described in the experimental part.

In a compost container, the formation of methane gas requires 30-35 ºC to start. The methane gas further increases the growth of bacteria, which starts the decaying process. For the present invention, this is enough for the decaying process to start, while bioplastic compositions comprising PLA according to prior art require a temperature of 70 ºC for the decomposition to start. A product, for example a film with the thickness of up to 70 µm, such as 25 µm, and even up to 1 mm, produced from the granules made from the composition according to the present invention can be fully decomposed in 180 days during the conditions stated above. If the temperature is further increased to 55 ºC the decomposition process will be reduced to a time of some weeks.

During decaying process of products prepared from the granules created from the present invention, some of the product will decay and may give rise to biogas, and the remaining within the digested sludge will be spread out on the fields. Dolomite and/or calcium carbonate will not influence the decaying process but will act as soil improvement agent out on the fields as it will neutralize the pH, which is favorable for soil. The dolomite and/or calcium carbonate will for instance provide the soil with growth factors such as calcium and magnesium and other important minerals.

The problem with the use of plastic material from fossil sources, or from raw material which does not degrade in nature are getting increased attention from governments as well as the public. The use of plastics in products giving rise to micro plastics in soil and water has also gained interest during later years. The composition of the present invention is fully biodegradable and compostable, without being a source of micro plastics. The dolomite and/or calcium carbonate is a neutral component within the composition, as it returns back to the nature in the same form as it is withdrawn from the nature. The starch and the oil according to the present invention come from vegetable origin, which is a renewable raw material, while the aromatic polyesters available on the market as of today mostly is from non-renewable raw material, but also from partly renewable and fully degradable sources, such as PBAT disclosed above. The composition according to the present invention may only comprise 6-30 % of non-renewable raw material.

The present invention further concerns a method for preparing a biodegradable and compostable composition, such as granules, according to above. The method according to the present invention comprises:
(a) polishing particles of dolomite and/or calcium carbonate to remove sharp edges on the surface;
(b) mixing said polished particles, with at least one oil of vegetable origin to provide a non-sticky mixture;
(c) heat mixing a composition comprising (i) at least one biodegradable and/or decayable aromatic polyester; and (ii) optionally starch of vegetable origin; (iii) an additive chosen from hydrated magnesium silicate such as talcum powder; and (iv) optionally at least one aliphatic polyester;
   thereafter, during continued mixing,
(d) adding said non-sticky mixture of step (b) to said heat mixed base composition; and
(e) extruding the mixture of step (d) into granules of said composition.

In one embodiment of the present invention, the method steps (d) and (e) is performed under controlled pressure and heating.

The controlled pressure may be below 300 bar, for instance 100-200 bar depending on the temperature. The controlled temperature may be 150-200 ºC.

The granules of said composition may further be processed using conventional machines and processing techniques such as blow molding, thermo forming, extrusion, and injection molding. The use of dolomite and/or calcium carbonate, which is being saturated with at least one oil of vegetable origin, will act as a lubricant for the machine. Decreasing the tear thereof, as compared to processing of other materials.

From the processing of the granules, several products can be produced. Among them are hygiene articles, and disposable products. In one use, there is a film produced, the film being stretched so as to create micro cracks in the film making in breathable. Further use when the product comes in contact with the ground or water, where the composition has advantages for this use such that it does not release micro plastics to the surrounding environment, it does not include substances being toxic to nature or humans, and it does not soften even during higher air temperatures. For further use, said composition provides with characteristics for a material as to be very flexible, such that it can be hard to break even stiff products prepared from the granules of said composition. This might be advantageous since the breaking of products can give rise to sharp structures which can be harmful. A flexible non-breakable product can then erase the risk of using the product as a sharp weapon if the products is used as for instance a disposable cutlery. Further, a film produced from the granules of the present invention can be used as a coating of for instance cardboard boxes or cardboard packages as used for foods such as dairy products.

The use of at least one oil of vegetable origin to saturate dolomite and/or calcium carbonate particles as well as starch of vegetable origin prevents water from permeabilizing the composition which increases tear strength and reduces permeability. This increases comfortability and usability when the granules made from the present invention are further processed to be used as bags.

Mixing dolomite and/or calcium carbonate particles with at least one oil of vegetable origin until saturation and with an additive chosen from hydrated magnesium silicate such as talcum powder allows the mix to act as a lubricant, reducing the tear of the machines used.

The composition of polished dolomite and/or calcium carbonate particles pre-treated with oil of at least one vegetable origin, optionally pre-treated starch of vegetable origin, aromatic polyester, and at least one aliphatic polyester, is mixed at a temperature which may be 150-200 ºC and under a pressure which may be below 300 bar during continued mixing. The mixing of the composition is preferably performed in an extruder, most preferably a twin-screw extruder.

The composition will be cut into granules. The granules may then be used for further processing using standard machine processes such as blow molding, thermo forming, extrusion, or injection molding. From such processes, several different products can be made such as hygiene products, disposable articles.

The present invention also concerns use of the composition or granules prepared from the composition as a formable material, wherein said formable material is processed and/or formed with known methods into waste-bags, bags, cutleries, disposable articles such as disposable sheets, disposable aprons, and disposable hygiene articles.

### EXAMPLES

By way of examples, and not limitation, the following examples identify a variety of compositions pursuant to the embodiments of the present invention.

### Experiment 1

In the first experiment dolomite particles, in a concentration of 25 % by weight of the calculated final composition, were polished to acquire smooth edges. Next, the particles were mixed with 5 % by weight of rapeseed oil to saturate the particles. The result of the mixing was a non-sticky mixture working as a lubricant in the further processing steps.

In parallel, 40 % by weight of PBAT was mixed with 10 % by weight of talcum powder and 20 % of polybutylene succinate during heating to 150 ºC under a pressure of 225 bar. The mixing was done in an extruder and the lubricant mixture from the first step was added to the extruder.

Using the extruder, the composition was pushed out of the extruder and cut into granules. The total weight of the composition was 5000 ton. The granules were further processed by blow molding into a film. The film was cooled down and stretched to acquire cracks of the film, to allow for air exchange through the film. The film was later used as a disposable sheet for use in e.g. hospitals.

### Experiment 2

In the second experiment 10 % by weight, of the final composition, of dolomite particles were polished to remove sharp edges. The particles were next mixed with 3 % by weight of glycerol, to transform the particles into a lubricant.

Further, 27 % by weight of PBAT was heat mixed at a temperature of 200 ºC and a pressure of 225 bar with 15 % by weight of rye bran as starch source, 5 % by weight of talcum powder and 40 % by weight of polybutylene succinate. The mixing was performed in an extruder and the lubricant mix of talcum powder and rapeseed oil was added to the mixture.

The mixture was pressed out of the extruder and cut into granules. The total weight of the composition was 5000 ton. The granules were further processed using thermo folding into a compostable trough. The use of rye in the mixture gave the trough a characteristic "wood-like" color, making it easy to distinguish it from other products of the same category.

### Experiment 3

In a third experiment 10 % by weight, of the final composition, of dolomite particles were polished to remove sharp edges. It was further mixed with 3 % by weight of rapeseed oil to acquire a lubricant effect of the mixture.

30 % by weight of PBAT was further, under a temperature of 200 ºC and a pressure of 225 bar, mixed with 10 % by weight of talcum powder and 47 % by weight of polybutylene succinate. The mixing was performed in an extruder and the lubricant mixture was further added. The mixture was further cut into granules. The total weight of the composition was 5000 ton. The granules were further processed by extrusion and was processed into a straw. The straw being fully biodegradable and compostable.

### Experiment 4

In a fourth experiment 10 %, by weight of the final composition, of dolomite particles was polished to acquire particles with no sharp edges. The particles were mixed with 2 % by weight of rapeseed oil, to transform the particles into a lubricant.

Further, 30 % by weight of PBAT was mixed with 10 % by weight of rye bran as starch source, 10 % by weight of talcum powder and 37 % by weight of polybutylene succinate. The mixing was performed at 150 ºC and under a pressure of 225 bar. Before mixing, the rye was pre-treated with 1 % by weight of rapeseed oil until saturation. The mixing was performed in an extruder and the lubricant mix was further added. The composition was cut into granules. The total weight of the composition was 5000 ton. The granules were further processed by injection molding into cutlery. The cutlery being stiff, but yet flexible such that they cannot be broken into pieces that have sharp edges. This eliminates the risk of using the cutleries as sharp for instance sharp weapons.

### Experiment 5

In a fifth experiment 15 %, by weight of the total composition, of dolomite particles were polished to acquire a smooth surface of the particles. They were further mixed with 2 % by weight of rapeseed oil to transform them into a lubricant.

Further, 68 % by weight of PBAT was mixed with 5 % by weight of talcum powder and 10 % by weight of polybutylene succinate during heating to 170 ºC and under a pressure of 225 bar. The mixing was performed in an extruder and the lubricant mixture was further added to the mixture.

The composition was cut into granules. The total weight of the composition was 5000 ton. The granules were further processed by blow molding into a film. The film was further used as a bag for instance for groceries.

### Experiment 6

In a sixth experiment 10 %, by weight of the total composition, of dolomite particles were polished to a smooth surface and further blended with 2 % by weigh of rapeseed oil to transform the particles into a lubricant.

Further, 15 % by weight of PBAT was mixed with 15 % of talcum powder and 48 % by weight of polybutylene succinate. The mixing was performed at 200 ºC and at a pressure of 225 bar, in an extruder. The lubricant mixture was further added to the extruder. Next, the composition was cut into granules and the granules was further processed in two separate ways. One part was processed through blow molding to a 50 µm thick film, which later was used as a waste bag and one part through thermo folding into trough.

### Experiment 7

The seventh experiment was a decomposition experiment. The waste bag produced from the film, which was produced from the granules of the present invention, from experiment 5 was placed in a compost together with 70-95 kg organic waste added each day for one week. The temperature in the compost was approximately 30 ºC at the start of the experiment. This induced the formation of methane gas, which in turn induced the growth of bacteria. During the decomposition process the temperature naturally increases over time to approximately 50 ºC, where the decomposition of the bag goes very fast. In under 180 days, the bag was completely decomposed, and the remaining sludge was used as soil fertilizer.

The film (waste bag) prepared by the composition of the invention decomposes at lower temperatures compared to prior art films containing e.g. PLA requiring higher temperatures for decomposition. This is an excellent sustainable improvement compared to the prior art plastic bags.

### Experiment 8

The eight experiment was a decomposition experiment. The waste bag produced from the film, which was produced from the granules of the present invention, from experiment 5 was placed in a compost together with 70-95 kg organic waste added each day for one week. The temperature in the compost was approximately 30 ºC at the start of the experiment. The temperature was by industrial means increased to reach 55 ºC. The increase in temperature fastened the decomposition process compared to experiment 7 and in a week the bag was completely decomposed, and the only remaining waste was soil. As a comparison, a waste bag including PLA was used in the same experiment. After the week, the waste bag containing PLA was still remained in stripes in the compost and could not be used as a soil improvement from that condition.

**Table 1 : decomposition experiment with two waste bags**

| | Experiment 7 | Experiment 8 |
|---|---|---|
| Waste bag of a composition according to Experiment 5 | No residues left | No residues left |
| Prior art bag containing PLA (poly lactic acid) | Stripes of the bag were present | Stripes of the bag were present |

Thus, it has been shown that a waste bag prepared by the composition according to the invention has excellent decomposition properties compared to prior art waste bags containing for instance poly lactic acid requiring higher temperatures for decomposition. In addition, no micro plastics are left in the soil after decomposition.

## Claims

1. A biodegradable and compostable composition comprising:
(i) 15-70 % by weight of at least one biodegradable and/or decayable aromatic polyester;
(ii) 10-40 % by weight of dolomite and/or calcium carbonate particles having a polished surface;
(iii) 0-30 % by weight of starch of vegetable origin;
(iv) 1-5 % by weight of at least one oil of vegetable origin and/or at least one polyol;
(v) 5-30 % by weight of an additive chosen from hydrated magnesium silicate such as talcum powder;
(vi) 0-50 % by weight of at least one aliphatic polyester.

2. A composition according to claim 1, wherein said dolomite and/or calcium carbonate particles have been pre-treated with said at least one oil of vegetable origin and/or at least one polyol.

3. A composition according to claim 1 or 2, wherein said starch of vegetable origin is chosen from at least one of wheat, oat, rye and barley or a combination thereof.

4. A composition according to any one of claims 1 - 3, wherein said dolomite and/or calcium carbonate particles have a particle size of 2-4 µm.

5. A composition according to any of claims 1 - 4, wherein said starch of vegetable origin has a particle size of 4-50 µm.

6. A composition according to any one of claims 1 - 5, wherein said starch of vegetable origin has been pre-treated with at least one oil of vegetable origin.

7. A method for preparing a biodegradable and compostable composition, such as granules, according to claim 1, which method comprises
(a) polishing particles of dolomite and/or calcium carbonate to remove sharp edges on the surface;
(b) mixing said polished particles, with at least one oil of vegetable origin or at least one polyol to provide a non-sticky mixture;
(c) heat mixing a composition comprising (i) at least one biodegradable and/or decayable aromatic polyester; (ii) optionally starch of vegetable origin; (iii) an additive chosen from hydrated magnesium silicate such as talcum powder; and (iv) optionally at least one aliphatic polyester;
thereafter, during continued mixing,
(d) adding said non-sticky mixture of step (b) to said heat mixed base composition; and
(e) extruding the mixture of step (d) into granules of said composition.

8. A method for preparation of a composition according to claim 7,
wherein the mixing in step (d) and extrusion in step (e) is performed under controlled pressure and heating.

9. A method for preparation of a composition according to claim 7 or 8,
wherein the mixing in step (d) and extrusion in step (e) is performed at a pressure below 300 bar.

10. A method for preparation of a composition according to claim 7, 8, or 9,
wherein the mixing in step (d) and extrusion in step (e) is performed at a temperature from 150 to 200 ºC.

11. A granule comprising a composition according to any one of the claims 1-6 or prepared according to the method as described in claims 7-10.

12. Use of a composition according to any one of claims 1-6 or a composition prepared according to the method according to any one of claim 7-10 or a granule according to claim 11 as a formable material for replacing fossil-based plastics.

13. Use according to claim 12, wherein said formable material is formed into waste-bags, bags, cutleries, disposable articles such as disposable sheets, disposable aprons, and disposable hygiene articles.

## Patentansprüche

1. Biologisch abbaubare und kompostierbare Zusammensetzung, die Folgendes umfasst:
(i) 15-70 Gew.-% mindestens eines biologisch abbaubaren und/oder verrottbaren aromatischen Polyesters;
(ii) 10-40 Gew.-% Dolomit- und/oder Calciumcarbonatpartikel mit einer polierten Oberfläche;
(iii) 0-30 Gew.% Stärke pflanzlichen Ursprungs;
(iv) 1-5 Gew.-% mindestens eines Öls pflanzlichen Ursprungs und/oder mindestens eines Polyols;
(v) 5-30 Gew.-% eines Zusatzstoffes, ausgewählt aus hydratisiertem Magnesiumsilikat, wie etwa Talkumpuder;
(vi) 0-50 Gew.-% mindestens eines aliphatischen Polyesters.

2. Zusammensetzung nach Anspruch 1, wobei die Dolomit- und/oder Calciumcarbonatpartikel mit dem mindestens einen Öl pflanzlichen Ursprungs und/oder dem mindestens einen Polyol vorbehandelt wurden.

3. Zusammensetzung nach Anspruch 1 oder 2, wobei die Stärke pflanzlichen Ursprungs ausgewählt ist aus mindestens einem von Weizen, Hafer, Roggen und Gerste oder einer Kombination davon.

4. Zusammensetzung nach einem der Ansprüche 1-3, wobei die Dolomit- und/oder Calciumcarbonatpartikel eine Partikelgröße von 2-4 µm aufweisen.

5. Zusammensetzung nach einem der Ansprüche 1-4, wobei die Stärke pflanzlichen Ursprungs eine Partikelgröße von 4-50 µm aufweist.

6. Zusammensetzung nach einem der Ansprüche 1-5, wobei die Stärke pflanzlichen Ursprungs mit mindestens einem Öl pflanzlichen Ursprungs vorbehandelt wurde.

7. Verfahren zur Herstellung einer biologisch abbaubaren und kompostierbaren Zusammensetzung, wie etwa Granulaten nach Anspruch 1, wobei das Verfahren Folgendes umfasst:
(a) Polieren von Dolomit- und/oder Calciumcarbonatpartikeln zum Entfernen scharfer Kanten an der Oberfläche;
(b) Mischen der polierten Partikel mit mindestens einem Öl pflanzlichen Ursprungs oder mindestens einem Polyol, um ein nicht klebriges Gemisch bereitzustellen;
(c) Wärmemischen einer Zusammensetzung, die (i) mindestens einen biologisch abbaubaren und/oder verrottbaren aromatischen Polyester umfasst; (ii) wahlweise Stärke pflanzlichen Ursprungs; (iii) einen Zusatzstoff, ausgewählt aus hydratisiertem Magnesiumsilikat, wie etwa Talkumpuder; und (iv) wahlweise mindestens einen aliphatischen Polyester;
anschließend unter weiterem Mischen
(d) Hinzufügen des nicht klebrigen Gemischs aus Schritt (b) zu der wärmegemischten Basiszusammensetzung; und
(e) Extrudieren des Gemischs aus Schritt (d) zu Granulaten der Zusammensetzung.

8. Verfahren zur Herstellung einer Zusammensetzung nach Anspruch 7, wobei das Mischen in Schritt (d) und das Extrudieren in Schritt (e) unter kontrolliertem Druck und Erhitzen durchgeführt wird.

9. Verfahren zur Herstellung einer Zusammensetzung nach Anspruch 7 oder 8, wobei das Mischen in Schritt (d) und das Extrudieren in Schritt (e) bei einem Druck von weniger als 300 bar durchgeführt werden.

10. Verfahren zur Herstellung einer Zusammensetzung nach Anspruch 7, 8 oder 9, wobei das Mischen in Schritt (d) und das Extrudieren in Schritt (e) bei einer Temperatur von 150 bis 200 °C durchgeführt werden.

11. Granulat, das eine Zusammensetzung nach einem der Ansprüche 1-6 oder hergestellt nach dem in den Ansprüchen 7-10 beschriebenen Verfahren umfasst.

12. Verwendung einer Zusammensetzung nach einem der Ansprüche 1-6 oder einer Zusammensetzung hergestellt nach dem Verfahren nach einem der Ansprüche 7-10 oder eines Granulats nach Anspruch 11 als formbares Material zum Ersatz fossilbasierter Kunststoffe.

13. Verwendung nach Anspruch 12, wobei aus dem formbaren Material Abfallsäcke, Taschen, Bestecke, Einwegartikel, wie etwa Einwegplatten, Einwegschürzen und Einweg-Hygieneartikel geformt werden.

## Revendications

1. Composition biodégradable et compostable comprenant :
(i) de 15 à 70 % en poids d'au moins un polyester aromatique biodégradable et/ou décomposable ;
(ii) de 10 à 40 % en poids de particules de dolomite et/ou de carbonate de calcium ayant une surface polie ;
(iii) de 0 à 30 % en poids d'amidon d'origine végétale ;
(iv) de 1 à 5 % en poids d'au moins une huile d'origine végétale et/ou d'au moins un polyol ;
(v) de de 5 à 30 % en poids d'un additif choisi parmi un silicate de magnésium hydraté tel que du talc en poudre ;
(vi) de 0 à 50 % en poids d'au moins un polyester aliphatique.

2. Composition selon la revendication 1, dans laquelle lesdites particules de dolomite et/ou de carbonate de calcium ont été prétraitées avec ladite au moins une huile d'origine végétale et/ou l'au moins un polyol.

3. Composition selon la revendication 1 ou 2, dans laquelle ledit amidon d'origine végétale est choisi parmi au moins l'un parmi le blé, l'avoine, le seigle et l'orge ou une combinaison de ceux-ci.

4. Composition selon l'une quelconque des revendications 1 à 3, dans laquelle lesdites particules de dolomite et/ou de carbonate de calcium ont une taille de particule de 2 à 4 µm.

5. Composition selon l'une quelconque des revendications 1 à 4, dans laquelle ledit amidon d'origine végétale a une taille de particule de 4 à 50 µm.

6. Composition selon l'une quelconque des revendications 1 à 5, dans laquelle ledit amidon d'origine végétale a été prétraité avec au moins une huile d'origine végétale.

7. Procédé de préparation d'une composition biodégradable et compostable, telle que des granulés, selon la revendication 1, lequel procédé comprend
(a) le polissage de particules de dolomite et/ou de carbonate de calcium pour éliminer les bords tranchants sur la surface ;
(b) le mélange desdites particules polies, avec au moins une huile d'origine végétale ou au moins un polyol pour obtenir un mélange non collant ;
(c) le mélange à chaud d'une composition comprenant (i) au moins un polyester aromatique biodégradable et/ou décomposable ; (ii) éventuellement de l'amidon d'origine végétale ; (iii) un additif choisi parmi un silicate de magnésium hydraté tel que du talc en poudre ; et (iv) éventuellement au moins un polyester aliphatique ; ensuite, pendant la poursuite du mélange,
(d) l'ajout dudit mélange non collant de l'étape (b) à ladite composition de base mélangée à chaud ; et
(e) l'extrusion du mélange de l'étape (d) en des granulés de ladite composition.

8. Procédé de préparation d'une composition selon la revendication 7, dans lequel le mélange de l'étape (d) et l'extrusion de l'étape (e) sont effectués sous pression et chauffage contrôlés.

9. Procédé de préparation d'une composition selon la revendication 7 ou 8, dans lequel le mélange de l'étape (d) et l'extrusion de l'étape (e) sont effectués à une pression inférieure à 300 bars.

10. Procédé de préparation d'une composition selon la revendication 7, 8 ou 9, dans lequel le mélange de l'étape (d) et l'extrusion de l'étape (e) sont effectués à une température de 150 à 200 °C.

11. Granulé comprenant une composition selon l'une quelconque des revendications 1 à 6 ou préparée selon le procédé tel que décrit dans les revendications 7 à 10.

12. Utilisation d'une composition selon l'une quelconque des revendications 1 à 6 ou d'une composition préparée selon le procédé selon l'une quelconque des revendications 7 à 10 ou d'un granulé selon la revendication 11 en tant que matériau formable pour remplacer des plastiques d'origine fossile.

13. Utilisation selon la revendication 12, dans laquelle ledit matériau formable est transformé en sacs poubelles, sacs, couverts, articles jetables tels que des draps jetables, des tabliers jetables et des articles d'hygiène jetables.
